# EUROPÄISCHE PATENTANMELDUNG

(11) **EP 0 602 676 A2**
(43) Veröffentlichungstag der Anmeldung: **22.06.1994**
(21) Anmeldenummer: 93120439.0
(22) Anmeldetag: 17.12.1993
(51) Int. Cl.: G07F 7/02, G07F 15/04

(54) **Stromverteilersystem**

(30) Priorität: 18.12.1992 DE 4243092
(71) Anmelder: Kreuzpaintner, Ludwig, D-84405 Dorfen-Stadt (DE)
(72) Erfinder: Kreuzpaintner, Ludwig, D-84405 Dorfen-Stadt (DE)
(74) Vertreter: Sajda, Wolf E., Dipl.-Phys.

(57) **Zusammenfassung**

Es wird ein Stromverteilersystem, beispielsweise für Baustellen angegeben, das eine Stromversorgung (8) und eine Vielzahl von Verbraucheranschlüssen (7A bis 7N) aufweist, die über Versorgungsleitungen (A bis N), Sicherheits-Schalteinrichtungen (6) und eine entsprechende Freigabeeinrichtung (5) an die Stromversorgung (8) angeschlossen sind. Die Freigabeeinrichtung (5) ist an einen Verbraucherzähler (4) und an einen Rechner (3) angeschlossen, ein Lese/Codiergerät (2) ist an den Rechner (3) angeschlossen und liest den benutzerspezifischen Inhalt von Wertkarten (1), entwertet die Wertkarten hinsichtlich der verfügbaren Energiemenge und aktualisiert diese nach Beendigung einer Verbrauchsperiode. Der Rechner (3) speichert den Inhalt der jeweiligen Wertkarten (1) für jeden Benutzer und Verbraucher gesondert und steuert den Betrieb der Freigabeeinrichtung (5) für jeden Verbraucheranschluß in Abhängigkeit vom eingelesenen Wert gesondert für jeden Benutzer in der Weise, daß jeder Benutzer nur nach der Eingabe einer gültigen Wertkarte Strom verbrauchen kann und nach Beendigung seiner jeweiligen Verbrauchsperiode den verbliebenen Restwert auf seiner Wertkarte (1) gutgeschrieben erhält.

## Beschreibung

Die Erfindung betrifft ein Stromverteilersystem, insbesondere für Baustellen, Mehrparteienhäuser oder dergleichen, mit einer Stromversorgung und mit einer Vielzahl von Verbraucheranschlüssen, die über Versorgungsleitungen, Sicherheits-Schalteinrichtungen und eine entsprechende Freigabeeinrichtung an die Stromversorgung angeschlossen sind.

Derartige Stromverteilerysteme werden benötigt, wenn beispielsweise auf einer Baustelle eine Vielzahl von Firmen tätig ist, die verschiedene Bauarbeiten ausführen und für ihre elektrischen Geräte elektrischen Strom benötigen. Solche Stromverteilersysteme werden auch in Mehrparteienhäusern benötigt, bei denen beispielsweise verschiedene elektrische Geräte zur allgemeinen Verfügung stehen, beispielsweise Waschautomaten, Trockner oder dergleichen.

Bei derartigen Stromverteilersystemen tritt das Problem auf, daß der jeweilige Benutzer nur soviel Strom verbrauchen soll, wie er auch tatsächlich im voraus bezahlt hat. Dabei muß vermieden werden, daß versehentlich oder absichtlich ein zweiter Benutzer Strom verbraucht, der von dem ersten Benutzer bezahlt wird.

In der DE-A-3 805 677 ist ein Elektrizitäts-Verteilerschrank beschrieben, wobei an einer Verteilertafel eines Elektrizitäts-Verteilerschrankes für Baustellen mehrere Steckdosen angeordnet sind, deren Stromabgabe über ihnen zugeordnete Zähler ermittelt wird. Dabei ist eine Auswahlvorrichtung vorgesehen, mit der eine freie Anschlußstelle anwählbar ist. Weiterhin ist eine Münz- oder Wertmarken-Schaltvorrichtung vorgesehen, mit der in Abhängigkeit von dem jeweiligen Münz- oder Wertmarkeneinwurf die angewählte Anschlußstelle zur Abgabe einer bestimmten Leistung frei schaltbar ist. Dieser herkömmliche Elektrizitäts-Verteilerschrank arbeitet nach dem Parkuhr-Prinzip, bei dem die Anschlußstelle im Einschaltzustand gehalten wird, bis die gekaufte Leistung verbraucht ist. Eine Rückspeicherung oder Rückerstattung von nicht verbrauchter Energie ist dort weder vorgesehen noch möglich.

In der DE-A-3 441 518 ist eine Einrichtung für mit Karten betätigte Automaten in einer Automatenhalle beschrieben, wobei es um ein Verfahren zur Leistungspreiserfassung in derartigen Automatenhallen oder Spielhallen geht, in denen verschiedene Leistungen angeboten werden. Dabei werden Wertkarten oder Kreditkarten, die eine bestimmte Wertinformation enthalten, in einem Schreib/Lesegerät gelesen, welches die Kartengültigkeit feststellt und die Wertinformation in den Speicher eines Rechners einliest. Zugleich wird die Wertkarte entwertet und als Benutzerkarte ausgegeben. Wenn der Benutzer die vorhandenen Automaten benutzen will, muß er seine entwertete Benutzerkarte in den Kartenleser in dem jeweiligen Spielautomaten einstecken, um diesen in Betrieb zu setzen. Auf diese Weise erfolgt eine Abbuchung von dem gespeicherten Guthaben in der Datenverarbeitungszentrale, mit der alle Spielautomaten verbunden sind. Es handelt sich dabei um eine vernetzte ortsfeste Installation, die erheblichen konstruktiven Aufwand erfordert, weil jeder Automat mit einem eigenen Kartenleser ausgerüstet sein muß. Die speziellen Probleme eines Stromverteilersystems sind nicht berücksichtigt.

In der DE 3 543 067 C2 ist ein Kassierzähler zum bargeldlosen Bezug von elektrischer Energie mit vorbezahlten Wertkarten beschrieben. Auf diese Weise können elektrische Maschinen betrieben werden, ohne daß am Arbeitsplatz selbst Bargeld entrichtet werden muß. Stattdessen zählt der Kassierzähler ein vorhandenes Guthaben anhand der Anzahl von eingesteckten Wertkarten, so daß für eine vorgegebene Zeit elektrische Energie für eine Maschine zur Verfügung steht. Weiterhin ist ein sogenannter Notkredit verfügbar, mit der Folge, daß auch noch nicht bezahlte Energie innerhalb bestimmter Grenzen entnommen werden kann. Wenn allerdings der Notkredit verbraucht ist, kann elektrische Energie erst dann wieder entnommen werden, wenn die Schuld bezahlt ist. Die Probleme eines Stromverteilersystems mit einer Vielzahl von Verbraucheranschlüssen ist dort nicht berücksichtigt. Die Rückspeicherung oder Rückvergütung von nicht verbrauchter Energie ist dort nicht vorgesehen.

In der DE 91 10 840 U1 ist ein Gebühren einziehendes Freischaltgerät für Stromverbraucher angegeben, bei dem zuvor programmierte Speicherelemente über ein in das Gerät integriertes Mikrocomputersystem gelesen, beschrieben und verwaltet werden können, bei dem weiterhin auf den Speicherelementen vermerkte Berechtigungen und Guthaben durch am Gerät angebrachte Tasten schrittweise in Freischaltzeiten umgewandelt werden können, wobei das Gerät mit einem Display zur Benutzerführung ausgestattet ist und Schalter enthält, mit denen individuelle Parameter und Tarife eingestellt werden können. Mit derartigen programmierten Speicherelementen soll offenbar erreicht werden, daß kein Bargeld zur Benutzung von elektrischen Geräten erforderlich ist. Es fehlt in dieser Druckschrift allerdings eine konkrete Lehre, wie das Freischaltgerät im einzelnen aufgebaut ist und funktioniert. Die Probleme eines Stromverteilersystems mit einer Vielzahl von Verbraucheranschlüssen sind dort nicht diskutiert.

Der Erfindung liegt daher die Aufgabe zugrunde, ein Stromverteilersystem anzugeben, das bei einer Vielzahl von Verbraucheranschlüssen und Benutzern einen einwandfreien Betrieb und eine exakte Abrechnung der verbrauchten Energie für die jeweiligen Benutzer gewährleistet.

Die erfindungsgemäße Lösung besteht darin, ein Stromverteilersystem der eingangs genannten Art so auszubilden, daß die Freigabeeinrichtung einerseits an einen Verbraucherzähler und andererseits an einen Rechner angeschlossen ist, daß der Rechner an ein Lese/Codiergerät angeschlossen ist, das den benutzerspezifischen Inhalt von Wertkarten liest, die Wertkarten hinsichtlich der verfügbaren Energiemenge entwertet und nach Beendigung einer Verbrauchsperiode hinsichtlich der verfügbaren Energiemenge aktualisiert, und daß der Rechner den benutzerspezifischen Inhalt der jeweiligen Wertkarten für jeden Benutzer bzw. Verbraucher gesondert speichert und den Betrieb der Freigabeeinrichtung für den jeweiligen Verbraucheranschluß in Abhängigkeit vom eingelesenen Wert jeweils gesondert für jeden Benutzer steuert, derart, daß jeder Benutzer nur nach der Eingabe einer gültigen Wertkarte Strom verbrauchen kann und nach Beendigung seiner jeweiligen Verbrauchsperiode den verbliebenen Restwert auf seiner Wertkarte gutgeschrieben erhält.

Mit dem erfindungsgemäßen System wird die Aufgabe in zufriedenstellender Weise gelöst. Insbesondere wird sichergestellt, daß jeder Benutzer nur den Strom verbrauchen kann, den er im voraus bezahlt hat, indem er eine entsprechende Wertkarte gekauft hat. Derartige Wertkarten können für verschiedene Energiemengen, also mit unterschiedlichen Wertvorgaben zur Verfügung gestellt werden. Insbesondere eignen sich wiederholt verwendbare und nachladbare Magnetkarten oder IC-Karten, die von handelsüblicher Bauart sein können. Damit ist ein bargeldloser Betrieb auf der Baustelle selbst möglich.

Aufgrund der Tatsache, daß der Benutzer nach Beendigung seiner jeweiligen Verbrauchsperiode den verbliebenen Restwert auf seiner Wertkarte gutgeschrieben erhält, wird vermieden, daß sich ein anderer Benutzer an demselben Verbraucheranschluß schadlos hält, ohne dafür bezahlt zu haben.

In Weiterbildung des erfindungsgemäßen Systems ist vorgesehen, daß das Lese/Codiergerät eine Anzeigeeinrichtung aufweist, die zumindest den Wert hinsichtlich der verfügbaren Energiemenge zu Beginn und nach Beendigung einer Verbrauchsperiode anzeigt. Der Benutzer weiß somit, wieviel Energie ihm zum Verbrauch zur Verfügung steht bzw. wie lange er ein elektrisches Gerät über einen bestimmten Verbraucheranschluß betreiben kann. Weiterhin kann der Benutzer aus der Anzeige entnehmen, ob es Zeit ist, sich eine neue Wertkarte zu beschaffen bzw. seine Wertkarte wieder aufladen zu lassen. Ferner kann der Benutzer auch während des Betriebes sich seinen jeweils aktuellen Restwert anzeigen lassen.

In Weiterbildung des erfindungsgemäßen Systems ist vorgesehen, daß das Lese/Codiergerät eine Tastatur aufweist und daß der Wert der Wertkarte nur dann eingelesen wird, wenn ein mit der Tastatur eingegebenes Codewort mit dem auf der Wertkarte gespeicherten Codewort übereinstimmt. Auf diese Weise kann die Sicherheit des Systems weiter verbessert werden. Eine verlorene oder gestohlene Wertkarte kann dann nämlich nicht ohne weiteres von einem fremden Benutzer verwendet und geleert werden.

Die Zuverlässigkeit des Systems wird weiterhin dadurch verbessert, daß die Anzeigeeinrichtung nur dann eine Anzeige für den jeweiligen Benutzer liefert, wenn die Wertkarte in das Lese/Codiergerät eingeführt ist.

Dabei erweist es sich als zweckmäßig, wenn die jeweiligen Daten nur für eine vorgegebene Zeitdauer von der Anzeigeeinrichtung angezeigt werden. Diese Daten sind insbesondere der verfügbare Wert bzw. die verfügbare Energiemenge. Zusätzlich können andere spezifische Daten hinsichtlich des Benutzers und des Verbraucheranschlusses angezeigt werden.

In Weiterbildung des erfindungsgemäßen Systems ist vorgesehen, daß der Rechner den von der jeweiligen Wertkarte eingelesenen Wert hinsichtlich der verfügbaren Energiemenge mit einer vorgegebenen Anzahl von Impulsen pro Energieeinheit umrechnet und als Summe von Zählimpulsen für den jeweiligen Benutzer und dessen zugeordneten Verbraucheranschluß speichert. Auf diese Weise ist es möglich, die verfügbare Energiemenge in exakt meßbaren Portionen zu erfassen und dem Benutzer am Verbraucheranschluß zur Verfügung zu stellen. Beispielsweise kann die Umrechnung mit 300 Zählimpulsen pro Kilowattstunde erfolgen, was einer Genauigkeit von 5 Zählimpulsen pro Kilowattminute entspricht und für die meisten Fälle der Praxis ausreichend ist.

In Weiterbildung des erfindungsgemäßen Systems ist vorgesehen, daß der Verbraucherzähler in Abhängigkeit vom Energieverbrauch und gesondert für jeden Verbraucheranschluß Zählimpulse an den Rechner liefert, wobei jede Energieeinheit einer vorgegebenen Anzahl von Zählimpulsen entspricht, und daß der Rechner einen Subtrahierer aufweist, der die Zählimpulse gemäß dem Verbrauch von der verfügbaren Summe von Zählimpulsen subtrahiert und der ein Unterbrechungssignal für die Freigabeeinrichtung liefert, wenn die verfügbare Summe auf Null abgenommen hat. Dabei wird zweckmäßigerweise derselbe Umrechnungsfaktor verwendet von beispielsweise 300 Zählimpulsen pro verbrauchter Kilowattstunde.

Bei dem erfindungsgemäßen System erweist es sich als zweckmäßig, wenn der Rechner eine Sendeeinrichtung aufweist, die am Ort des jeweiligen Verbraucheranschlusses ein Warnsignal liefert, wenn bei zeitlich gleichbleibend angenommenem Energieverbrauch nur noch eine begrenzte Menge an Restenergie als Reserve lieferbar ist.

Damit wird gewährleistet, daß der Strom nicht plötzlich am Verbraucheranschluß abgeschaltet wird und damit ein angeschlossenes elektrisches Gerät, z.B. ein Motor, plötzlich stehenbleibt. Vielmehr erhält der Benutzer Gelegenheit, sich auf die bevorstehende Abschaltung einzustellen, beispielsweise eine weitere Wertkarte nachzuladen oder aber seine elektrischen Geräte ordnungsgemäß abzuschalten.

In Weiterbildung des Systems ist vorgesehen, daß die Sendeeinrichtung derart an die Versorgungsleitungen angeschlossen ist, daß sie auf der jeweiligen Versorgungsleitung ein Warnsignal einkoppelt, wenn nur noch die begrenzte Menge an Restenergie als Reserve lieferbar ist. Dabei können solche Warnsignale beispielsweise kapazitiv eingekoppelt werden, wobei sich die verfügbaren Versorgungsleitungen verwenden lassen, die unmittelbar zum Verbraucheranschluß führen.

Dabei erweist es sich als zweckmäßig, wenn jedem Verbraucheranschluß eine entfernbare optische und/oder akustische Warneinrichtung zugeordnet ist, die mit einer vorgegebenen Signalfrequenz arbeitet. Der jeweilige Benutzer kann somit seine eigene Warneinrichtung mitbringen und anschließen, beispielsweise in eine Steckdose einstecken.

Bei dem erfindungsgemäßen System erweist es sich als zweckmäßig, wenn der Rechner nach dem Einlesen der Daten von der Wertkarte eines ersten Benutzers für einen bestimmten Verbraucheranschluß diesen Verbraucheranschluß für den ersten Benutzer freigibt, aber für jeden anderen Benutzer so lange sperrt, bis der eingelesene Wert für die verfügbare Energie verbraucht ist. Damit wird erreicht, daß die verfügbare Energiemenge eindeutig einem bestimmten Benutzer zugeordnet werden kann, ohne daß es zu Unstimmigkeiten zwischen verschiedenen Benutzern kommen kann. Erst wenn der erste Benutzer den Wert seiner Wertkarte verbraucht oder den verbliebenen Restwert auf seiner Wertkarte gutgeschrieben erhalten hat, steht dieser Verbraucheranschluß für einen weiteren Benutzer zur Verfügung.

Dies bietet den Vorteil, daß durchaus verschiedene Wertkarten für ein und denselben Verbraucheranschluß ausgestellt werden können. Diese können dann in beliebiger Reihenfolge zeitlich nacheinander verwendet werden, ohne daß es zu einer zeitlichen Überlappung kommen kann.

In Weiterbildung des erfindungsgemäßen Systems ist vorgesehen, daß der Rechner nach dem Einlesen der Daten von der Wertkarte eines ersten Benutzers für einen bestimmten Verbraucheranschluß nur dann Daten von einer weiteren Wertkarte desselben Benutzers einliest, wenn die Identität dieses ersten Benutzers aus den persönlichen Kenndaten der Wertkarte und/oder den über die Tastatur eingegebenen Kenndaten festgestellt worden ist.

Damit wird erreicht, daß ein bestimmter Benutzer, beispielsweise veranlaßt durch ein Warnsignal, die für ihn verfügbare Energiemenge aufstocken kann, damit er an seinem Verbraucheranschluß die erforderlichen Arbeiten weiterführen und beenden kann. Dies bietet den weiteren Vorteil, daß kein anderer Benutzer sich an diesem bestimmten Verbraucheranschluß einschieben und den ersten Benutzer behindern kann.

In Weiterbildung des erfindungsgemäßen Systems ist vorgesehen, daß der Rechner die Daten für einen verbliebenen Restwert von nicht verbrauchter Energie für einen Verbraucheranschluß nur dann auf eine Wertkarte zurückcodiert, wenn die Identität des jeweiligen Benutzers aus den persönlichen Kenndaten der Wertkarte und/oder den über die Tastatur eingegebenen Kenndaten festgestellt worden ist. Damit wird in vorteilhafter Weise erreicht, daß kein unberechtigter Benutzer einen verbliebenen Restwert von nicht verbrauchter Energie auf seine eigene Wertkarte gutschreiben läßt.

Bei einer speziellen Ausführungsform des erfindungsgemäßen Systems kann die Anordnung so getroffen sein, daß die Energiezufuhr zu dem jeweiligen Verbraucheranschluß durch das Einstecken der Wertkarte in das Lese/Codiergerät und den Befehl zum Zurückcodieren des Restwertes auf die Wertkarte unterbrochen wird. Damit wird das Lese/Codiergerät von dem jeweiligen Benutzer praktisch als Ausschalter benutzt. Zum gleichen Zeitpunkt erhält er den aktuellen Stand des Restwertes für nicht verbrauchte Energie für weitere Dispositionen.

Besonders vorteilhaft ist es, wenn das gesamte erfindungsgemäße System in einem transportablen, abschließbaren Gehäuse aus rostfreiem Material, insbesondere aus isolierendem Kunststoff untergebracht ist, dessen Innenraum gegen Spritzwasser und Regenwasser geschützt sowie mit einer Klimaanlage versehen ist. Dabei ist nicht nur die Mobilität des Systems vorteilhaft, sondern auch der Umstand, daß das Gehäuse selbst wartungsfrei ist. Dies ist insbesondere dann von Interesse, wenn das System im Freien auf einer Baustelle zum Einsatz gelangt.

Durch die angegebenen Merkmale wird der einwandfreie und zuverlässige Betrieb unterstützt. Mit einer Klimaanlage wird dabei erreicht, daß auch bei ungünstigen Klima- oder Wetterbedingungen der einwandfreie Betrieb gewährleistet ist, und zwar sowohl bei tiefen Temperaturen im Winter durch Beheizung als auch bei hohen Temperaturen im Sommer durch Kühlung. Die Klimaanlage ist dabei zweckmäßigerweise mit einem geeigneten Gebläse ausgerüstet.

In Weiterbildung des erfindungsgemäßen Systems ist vorgesehen, daß es eine eigene Stromversorgung aufweist, die die Steuerung und/oder die Klimaanlage mit Strom versorgt. Damit ist der einwandfreie Betrieb des Systems jederzeit, auch zu Testzwecken gewährleistet, auch wenn das System noch nicht an eine externe Stromversorgung angeschlossen ist.

In Weiterbildung des erfindungsgemäßen Systems ist vorgesehen, daß die jeweiligen Verbraucheranschlüsse an Überstrom- und Fehlerstrom-Schutzeinrichtungen angeschlossen und mit einer Phasenüberwachung ausgerüstet sind. Auch diese Maßnahmen tragen zu einem einwandfreien Betrieb des Systems bei und gewährleisten, daß sowohl das System als auch die angeschlossenen Verbraucher geschützt sind. Mit der Phasenüberwachung wird insbesondere die Richtung des Drehfeldes geprüft und gegebenenfalls eine Fehleranzeige geliefert, damit eine ordnungsgemäße Polung der jeweiligen Drehstromanschlüsse gewährleistet ist.

Bei dem erfindungsgemäßen System ist der Verbraucherzähler stoßunempfindlich und weist eine hohe elektromagnetische Verträglichkeit auf. Dies trägt zu einem einwandfreien, störungsfreien Betrieb bei, bei dem eine exakte Abrechnung der verbrauchten Energie gewährleistet ist.

In Weiterbildung des erfindungsgemäßen Systems ist vorgesehen, daß die gesamte Elektrik mit einem Überspannungsschutz ausgerüstet ist, der sowohl auf Spannungsspitzen der Stromversorgung als auch auf Blitzschlageinwirkungen reagiert und diese zur Erde ableitet. Dies trägt ebenfalls dazu bei, die Betriebssicherheit zu gewährleisten.

Die Erfindung wird nachstehend, auch hinsichtlich weiterer Merkmale und Vorteile, anhand der Beschreibung eines Ausführungsbeispiels und unter Bezugnahme auf die beiliegende Zeichnung näher erläutert.

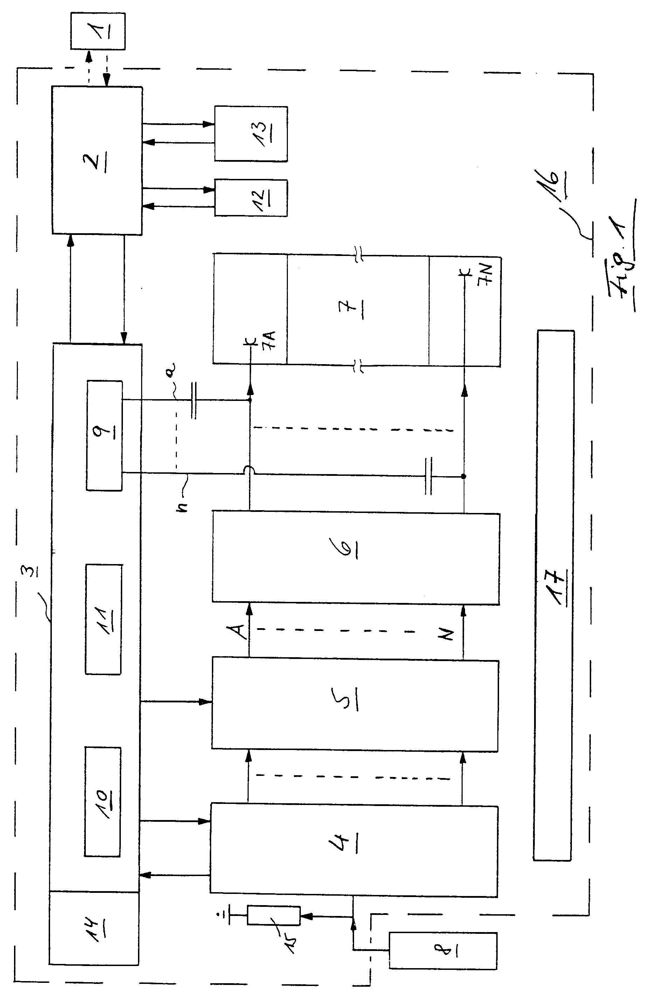

Die (einzige) Fig. 1 der Zeichnung zeigt schematisch den Aufbau einer Ausführungsform des erfindungsgemäßen Stromverteilersystems.

Im oberen Bereich der Zeichnung erkennt man ein Lese/Codiergerät 2, das an eine Anzeigeeinrichtung 12 und gegebenenfalls eine Tastatur 13 angeschlossen ist. Das Lese/Codiergerät 2 ist zum Lesen und Codieren von Wertkarten 1 vorgesehen, die vom Benutzer vor der Benutzung des Stromverteilersystems käuflich zu erwerben sind. Hierfür eignen sich insbesondere Magnetkarten oder IC-Karten, die wiederholt verwendbar und nachladbar sind.

Derartige Wertkarten 1 enthalten zweckmäßigerweise benutzerspezifische Daten und Daten, die für die gekaufte Energiemenge repräsentativ sind, beispielsweise für eine Energiemenge von 50 kWh.

Das Lese/Codiergerät 2 ist an eine Steuerung oder einen Rechner 3 angeschlossen, der in schematisch angedeuteter Weise einen Programmspeicher 10, einen Datenspeicher 11, eine CPU oder Zentraleinheit 14 und eine Sendeeinrichtung 9 aufweist. Im Programmspeicher 10 ist das für den Betrieb des Stromverteilersystems erforderliche Programm gespeichert, während der Datenspeicher 11 zur Speicherung der benutzerspezifischen Daten und der Daten dient, welche die für den jeweiligen Benutzer verfügbare Energiemenge repräsentieren. Der Datenspeicher 11 ist zweckmäßigerweise als nicht-flüchtiger RAM ausgebildet, der auch bei Stromausfall die relevanten Daten über einen ausreichenden Zeitraum speichert. Die Sendeeinrichtung 9 wird im Zusammenhang mit der Funktion des Systems weiter unten beschrieben.

Eine Stromversorgung 8 ist über einen Verbraucherzähler 4, eine Freigabeeinrichtung 5 und eine Sicherheits-Schalteinrichtung 6 mit der Verbrauchereinrichtung 7 über eine vorgegebene Anzahl von Leitungen A bis N verbunden, wobei die Verbrauchereinrichtung 7 eine entsprechende Anzahl von Verbraucheranschlüssen 7A bis 7N aufweist.

Unter einem Verbraucheranschluß wird hierbei der einem bestimmten Benutzer zugeordnete Platz verstanden, der seinerseits eine entsprechende Anzahl von Steckdosen oder sonstigen Anschlüssen aufweisen kann, die in der Zeichnung nicht näher dargestellt sind.

Die Leitungen A bis N, die von der Stromversorgung 8 zu den jeweiligen Verbraucheranschlüssen 7A bis 7N führen, sind zweckmäßigerweise als Vierleiter-Kabel ausgebildet, um den jeweiligen Verbraucheranschluß mit Drehstrom zu versorgen. Sie können aber auch als normale Wechselstromkabel ausgebildet sein, wenn mit dem üblichen Netzstrom gearbeitet wird.

Der Verbraucherzähler 4 ist außerdem an den Rechner 3 angeschlossen und so ausgebildet, daß er für jede der Leitungen A bis N gesondert die verbrauchte Energie mißt bzw. zählt und mit seinem jeweiligen Zähler ein entsprechendes Signal an den Rechner 3 liefert. Weiterhin kann der Start jedes Zählers in dem Verbraucherzähler 4 mit einem Steuersignal von dem Rechner 3 gestartet werden. Über diese Steuerleitung kann dann der jeweilige Zähler auf Null zurückgesetzt werden, wenn eine Verbrauchsperiode eines bestimmten Verbraucheranschlusses beendet ist.

Der Betrieb der Freigabeeinrichtung 5, die dem Verbraucherzähler 4 nachgeschaltet ist, wird von dem Rechner 3 gesteuert. Diese Freigabeeinrichtung 5 enthält eine entsprechende Anzahl von Leistungsschützen, die für die jeweiligen Leitungen A bis N vorgesehen sind.

Der Freigabeeinrichtung 5 ist eine übliche Sicherheits-Schalteinrichtung 6 nachgeschaltet, die für jede der Leitungen A bis N entsprechende Sicherungen aufweist, um das Fließen von Überströmen zuverlässig zu verhindern. Ferner ist zweckmäßigerweise eine Fehlerstrom-Schutzeinrichtung vorgesehen, die beim Überschreiten eines vorgegebenen Fehlerstromgrenzwertes auslöst. Bei einer speziellen Ausführungsform ist vorgesehen, daß die jeweiligen Verbraucheranschlüsse 7A bis 7N an eine Phasenüberwachung angeschlossen sind, die die Richtung des Drehfeldes prüft und gegebenenfalls eine Fehleranzeige liefert, um eine ordnungsgemäße Polung des jeweiligen Verbraucheranschlusses zu gewährleisten. Solange eine Fehleranzeige vorliegt, kann dementsprechend vorgesehen sein, daß die entsprechende Leitung für den Benutzer nicht freigeschaltet werden kann.

Weiterhin erkennt man Signalleitungen a bis n, die von einer Sendeeinrichtung 9 in dem Rechner 3 zu den Versorgungsleitungen A bis N führen und an diese beispielsweise kapazitiv gekoppelt sind, wobei diese Einkopplung auch in anderer Weise erfolgen kann. Die Sendeeinrichtung 9 kann selbstverständlich auch in anderer Weise an die jeweiligen Verbraucheranschlüsse 7A bis 7N angeschlossen sein, beispielsweise mit eigenen Signalleitungen, die zu entsprechenden optischen und/oder akustischen Warneinrichtungen führen, die in der Zeichnung nicht dargestellt sind.

Nachstehend wird der Betrieb des Stromverteilersystems näher erläutert.

Vor der Benutzung des Stromverteilersystems erwirbt der jeweilige Benutzer eine Wertkarte 1, die außer dem gekauften Gegenwert an Energie in einer bestimmten Menge von Kilowattstunden noch benutzerspezifische Daten enthält, beispielsweise eine Kartennummer, Daten für den zugeordneten Verbraucheranschluß 7A bis 7N sowie gegebenenfalls ein benutzerspezifisches Codewort, wenn eine höhere Sicherheit gewünscht ist.

Nach dem Einstecken der Wertkarte 1 in das Lese/Codiergerät 2 wird der Inhalt der Wertkarte 1 gelesen und zumindest die verfügbare Energiemenge und der dazugehörige Verbraucheranschluß auf der Anzeigeeinrichtung 12 angezeigt, zumindest für eine vorgegebene Zeitdauer von beispielsweise 15 Sekunden. Dabei wird eine Gültigkeitsprüfung der Wertkarte 1 durchgeführt, wobei eine Anzeige der Einzeldaten nur bei gültiger Wertkarte 1 erfolgt, sonst aber eine Fehleranzeige durchgeführt wird, daß die Wertkarte 1 ungültig bzw. abgelaufen ist. Zusätzlich kann die Abfrage eines Codewortes durchgeführt werden, welches mit der dazugehörigen Tastatur 13 einzugeben ist.

Der Inhalt der jeweiligen Wertkarte 1 wird von dem Lese/Codiergerät 2 an den Rechner 3 gegeben und dort im Datenspeicher 11 eingespeichert. Dann werden die Daten hinsichtlich des verfügbaren Wertes, also der verfügbaren Energiemenge, auf dieser Wertkarte 1 gelöscht. Erst danach wird die Wertkarte 1 von dem Lese/Codiergerät wieder an den Benutzer ausgegeben. Damit ist der Wert auf der Wertkarte 1 gelöscht, aber im Datenspeicher 11 des Rechners 3 gespeichert, so daß mit dieser Wertkarte 1 kein Mißbrauch getrieben werden kann.

Sofern eine höhere Sicherheitsstufe bei der Datenverarbeitung erforderlich ist, laufen diese Vorgänge nach dem Einstecken der Wertkarte 1 erst dann ab, wenn das Codewort über die Tastatur 13 eingegeben und Koinzidenz mit dem Codewort festgestellt worden ist, das auf der Wertkarte 1 unter den benutzerspezifischen Daten gespeichert ist.

Sobald diese Daten von der Wertkarte 1 in dem Rechner 3 gespeichert worden sind, liefert dieser ein Freigabesignal an die Freigabeeinrichtung 5 für die jeweilige Verbraucherleitung, die zu dem entsprechenden Verbraucheranschluß führt, beispielsweise dem Anschluß 7A. Gleichzeitig wird zweckmäßigerweise ein Rücksetzsignal an den dazugehörigen Zähler im Verbraucherzähler 4 gegeben, damit dieser Zähler auf Null gesetzt wird und den Verbrauch des entsprechenden Verbraucheranschlusses in der Verbrauchereinrichtung 7 messen kann. Der Benutzer kann dann beispielsweise an seinem zugeordneten Verbraucheranschluß 7A Strom entnehmen, der von der Stromversorgung 8 geliefert wird, und zwar an jeder einzelnen Anschlußeinheit, die zu diesem Verbraucheranschluß 7A gehört.

Sobald der erste Benutzer seine Wertkarte 1 über das Lese/Codiergerät 2 eingegeben und seinen Arbeitsplatz mit dem dazugehörigen Verbraucheranschluß freigeschaltet bekommen hat, kann der nächste Benutzer seine Wertkarte 1 eingeben, woraufhin sich der oben beschriebene Vorgang wiederholt.

Der zweite Benutzer kann dann jeden anderen der freien Verbraucheranschlüsse 7B bis 7N zugeteilt bekommen, nicht aber den Verbraucheranschluß 7A, der dem ersten Benutzer bereits zugeteilt worden ist und der somit von dem Rechner 3 automatisch für jeden anderen Benutzer gesperrt ist, solange der erste Benutzer des Verbraucheranschlusses 7A noch ein Guthaben im Datenspeicher 11 des Rechners 3 hat.

Entsprechendes gilt natürlich auch für die übrigen Benutzer, für die dann noch die Verbraucheranschlüsse 7C bis 7N zur Verfügung stehen.

Hat ein Benutzer seine Arbeiten an einem Tag beendet, an dem er beispielsweise den Verbraucheranschluß 7A benutzt hat, so schaltet er seine elektrischen Geräte ab und/oder betätigt einen Schalter an diesem Verbraucheranschluß 7A. Anschließend wird die Wertkarte 1 in das Lese/Codiergerät 2 eingegeben, und es wird der aktuelle Restwert für die dann noch verfügbare Energiemenge auf der Wertkarte 1 gutgeschrieben, die vorher auf Null gesetzt worden war. Dabei kann es zweckmäßig sein, daß dieses Zurückcodieren des Restwertes erst dann erfolgt, wenn der Benutzer sein entsprechendes Codewort über die Tastatur 13 in das Lese/Codiergerät 2 eingegeben hat und die Koinzidenz dieses Codewortes mit dem Codewort auf der Wertkarte 1 bestätigt worden ist.

Sobald die Wertkarte 1 aktualisiert und von dem Lese/Codiergerät 2 wieder ausgegeben worden ist, kann der entsprechende Verbraucheranschluß, beispielsweise der Verbraucheranschluß 7A einem anderen Benutzer zur Verfügung gestellt werden.

Es darf darauf hingewiesen werden, daß der Restwert von einem bestimmten Verbraucheranschluß, beispielsweise 7A, nur auf diejenige Wertkarte 1 zurückcodiert werden kann, von der die Anfangsdaten eingelesen worden sind. Eine Zurückcodierung auf eine andere Wertkarte 1 ist aus Sicherheitsgründen nicht möglich. Dadurch kann es weder zufällig noch absichtlich zu einer "Fehlbuchung" kommen. Ein Diebstahl ist damit weitgehend ausgeschlossen. Dies gilt auch dann, wenn für einen bestimmten Verbraucheranschluß, beispielsweise 7A, mehrere Wertkarten 1 ausgegeben sind. Denn diese Wertkarten 1 unterscheiden sich hinsichtlich der benutzerspezifischen Daten zumindest in einer Einzelheit, so daß die erforderliche Sicherheit dadurch gewährleistet ist, daß der Rechner 3 die entsprechenden Datensätze vergleicht, bevor er die Aktualisierung einer Wertkarte 1 durchführt.

Diese Aktualisierung von Wertkarten 1 wird in entsprechender Weise für alle anderen Wertkarten durchgeführt, die für entsprechende Verbraucheranschlüsse 7B bis 7N eingelesen worden sind.

Spätestens in dem Zeitpunkt, in welchem die Daten hinsichtlich des verbliebenen Restwertes auf eine bestimmte Wertkarte gutgeschrieben werden, wird der entsprechende Verbraucheranschluß gesperrt, so daß an diesem Verbraucheranschluß so lange kein Strom entnommen werden kann, bis eine neue gültige Wertkarte am Lese/Codiergerät 2 eingegeben worden ist. Das entsprechende Sperrsignal liefert der Rechner 3 an die Freigabeeinrichtung 5 für die dazugehörige Leitung.

In der Praxis kann der Fall auftreten, daß ein Benutzer an einem Tag einen besonders hohen Energieverbrauch hat, weil besonders viele Verbraucher an diesem Verbraucheranschluß Strom entnehmen. Damit der Benutzer nicht davon überrascht wird, daß die Stromzufuhr zu diesem Verbraucheranschluß abgeschaltet wird, während angeschlossene Maschinen arbeiten, kann es zweckmäßig sein, eine Warneinrichtung für den jeweiligen Verbraucheranschluß 7A bis 7N vorzusehen, um den Benutzer rechtzeitig auf diese Gefahr aufmerksam zu machen.

Wenn beispielsweise die verfügbare Energiemenge noch für weitere zehn Minuten ausreicht, wenn ein gleichbleibender Energieverbrauch pro Minute vorausgesetzt wird, so sollte zweckmäßigerweise eine derartige Warnung ausgelöst werden, und zwar in Form eines optischen und/oder akustischen Warnsignals, damit der Benutzer Gelegenheit erhält, eine weitere Wertkarte 1 über das Lese/Codiergerät 2 zu laden und damit seine verfügbare Energiemenge aufzustocken.

Zu diesem Zweck ist in der Zeichnung eine Sendeeinrichtung 9 angedeutet, die über Signalleitungen a bis n an die Verbraucherleitungen A bis N angeschlossen, beispielsweise kapazitiv gekoppelt ist. Diese Sendeeinrichtung 9 wird zweckmäßigerweise dann in dem Rechner 3 angesteuert, wenn die Daten für die noch verfügbare Energiemenge einen vorgegebenen Grenzwert unterschreiten.

Um eine möglichst exakte Erfassung der für den jeweiligen Benutzer verfügbaren Energiemenge sowie der von ihm verbrauchten Energiemenge zu gewährleisten, wird die von der Wertkarte 1 eingelesene Energiemenge zweckmäßigerweise umgerechnet in eine vorgegebene Anzahl von Zählimpulsen für den jeweiligen Benutzer und seinen zugeordneten Verbraucheranschluß. Beispielsweise kann eine Anzahl von 300 Zählimpulsen pro Kilowattstunde zugrunde gelegt werden. Auch der Verbraucherzähler 4 arbeitet zweckmäßigerweise mit derartigen Zählimpulsen, wobei jeder Energieeinheit eine vorgegebene Anzahl von solchen Zählimpulsen entspricht. Selbstverständlich ist es auch möglich, mit einem anderen Umrechnungsfaktor zu arbeiten, beispielsweise 3600 Zählimpulsen pro Kilowattstunde, so daß jeder Kilowattsekunde ein Zählimpuls entspricht.

Der Rechner 3 ist zweckmäßigerweise mit einem Subtrahierer für jede der Verbraucherleitungen A bis N ausgelegt, wobei der Subtrahierer von der eingelesenen Summe von Zählimpulsen diejenigen Zählimpulse subtrahiert, die der entsprechende Zähler in dem Verbraucherzähler 4 liefert. Wenn dann ein vorgegebener Grenzwert erreicht wird, liefert der Rechner 3 intern ein Signal an die Sendeeinrichtung 9 für die entsprechende Signalleitung. Dieser Grenzwert kann eine vorgegebene Anzahl von Zählimpulsen, beispielsweise 1000 Zählimpulse sein. Alternativ kann der Rechner während des Betriebes aus dem Verbrauch an Zählimpulsen pro Zeiteinheit ermitteln, wie viele Zeiteinheiten an Energie noch an einen Verbraucheranschluß geliefert werden kann, wenn ein zeitlich gleichbleibender Energieverbrauch zugrunde gelegt wird. Der Rechner wird dann der Sendeeinrichtung 9 ein derartiges Steuersignal liefern, wenn die verbliebene Energiemenge noch für eine bestimmte Zeitdauer ausreicht. Die Sendeeinrichtung 9 liefert dann ein entsprechendes Warnsignal an den betroffenen Verbraucheranschluß.

Der betroffene Benutzer kann dann innerhalb der ihm verbleibenden Zeit mit einer weiteren Wertkarte 1 nachladen, ohne daß er seine Maschinen in der Zwischenzeit abschalten muß. Die Eingabe einer weiteren Wertkarte 1 während des laufenden Betriebes an einem bestimmten Verbraucheranschluß kann zweckmäßigerweise so erfolgen, daß diese Eingabe nur unter gleichzeitiger Eingabe eines Codewortes an dem Lese/Codiergerät 2 erfolgt, um Unstimmigkeiten unter den verschiedenen Benutzern zu vermeiden.

Weiterhin ist es während des Betriebes möglich, den aktuellen Energierestwert von der Anzeigeeinrichtung 12 anzeigen zu lassen, indem der jeweilige Benutzer seine Wertkarte 1 in das Lese/Codiergerät 2 einsteckt und gegebenenfalls sein Codewort eingibt.

Wie in der Zeichnung schematisch angedeutet, ist das gesamte System zweckmäßigerweise in einem transportablen, abschließbaren Gehäuse 16 untergebracht, mit Ausnahme der Stromversorgung 8 selbst, die über ein Kabel an das System angeschlossen ist, welches mit dem Verbraucherzähler 4 sowie den sonstigen Einrichtungen verbunden ist. Das Gehäuse 16 besteht aus rostfreiem Material, insbesondere aus isolierendem Kunststoff mit geeigneter Festigkeit, so daß es nicht ohne weiteres von unbefugten Personen geöffnet werden kann. Insbesondere lassen sich derartige Gehäuse aus hartem Kunststoff, im Gegensatz zu Blechschränken, nicht plastisch verformen oder aufbiegen. Dadurch wird die Einbruchsicherheit erhöht und ein einwandfreier Betrieb gewährleistet.

Eine Klimaanlage 17, zweckmäßigerweise mit Heiz- und Kühleinrichtungen sowie einem entsprechenden Gebläse sorgt dafür, daß das System innerhalb eines vorgegebenen Temperaturbereiches arbeitet und nicht durch zu tiefe oder zu hohe Temperaturen beeinträchtigt wird.

Das System kann dabei eine in der Zeichnung nicht dargestellte eigene Stromversorgung aufweisen, die entweder die Steuerung 3 oder die Klimaanlage 17 oder beide Einheiten mit Strom versorgt, und zwar auch dann, wenn das System noch nicht an die externe Stromversorgung 8 angeschlossen ist.

Die oben beschriebenen Verbraucherzähler 4 sind zweckmäßigerweise von stoßunempfindlicher Bauart und haben eine hohe elektromagnetische Verträglichkeit, damit die gewünschte präzise Erfassung und Abrechnung der verbrauchten Energie für die jeweiligen Benutzer gewährleistet ist.

Wie in der Zeichnung schematisch angedeutet, ist ein Überspannungsschutz 15 vorgesehen, der zweckmäßigerweise an das Zuführungskabel von der Stromversorgung 8, aber auch an die gesamte Elektrik des Systems angeschlossen ist. Dieser Überspannungsschutz 15 reagiert auf Spannungsspitzen der Stromversorgung 8 sowie auf Spannungsspitzen aufgrund von Blitzschlageinwirkungen und leitet diese zur Erde ab. Diese Maßnahmen tragen ebenfalls zu einem sicheren und einwandfreien Betrieb des Systems bei.

## Patentansprüche

1. Stromverteilersystem, insbesondere für Baustellen, Mehrparteienhäuser oder dergleichen,
- mit einer Stromversorgung (8) und
- mit einer Vielzahl von Verbraucheranschlüssen (7A bis 7N), die über Versorgungsleitungen (A bis N), Sicherheits-Schalteinrichtungen (6) und eine entsprechende Freigabeeinrichtung (5) an die Stromversorgung (8) angeschlossen sind,
dadurch gekennzeichnet,
daß die Freigabeeinrichtung (5) einerseits an einen Verbraucherzähler (4) und andererseits an einen Rechner (3) angeschlossen ist,
daß der Rechner (3) an ein Lese/Codiergerät (2) angeschlossen ist, das den benutzerspezifischen Inhalt von Wertkarten (1) liest, die Wertkarten (1) hinsichtlich der verfügbaren Energiemenge entwertet und nach Beendigung einer Verbrauchsperiode hinsichtlich der verfügbaren Energiemenge aktualisiert,
und daß der Rechner (3) den benutzerspezifischen Inhalt der jeweiligen Wertkarten (1) für jeden Benutzer bzw. Verbraucher gesondert speichert und den Betrieb der Freigabeeinrichtung (5) für den jeweiligen Verbraucheranschluß (7A bis 7N) in Abhängigkeit vom eingelesenen Wert jeweils gesondert für jeden Benutzer steuert, derart, daß jeder Benutzer nur nach der Eingabe einer gültigen Wertkarte (1) Strom verbrauchen kann und nach Beendigung seiner jeweiligen Verbrauchsperiode den verbliebenen Restwert auf seiner Wertkarte (1) gutgeschrieben erhält.

2. System nach Anspruch 1,
dadurch gekennzeichnet,
daß das Lese/Codiergerät eine Anzeigeeinrichtung (12) aufweist, die zumindest den Wert hinsichtlich der verfügbaren Energiemenge zu Beginn und nach Beendigung einer Verbrauchsperiode, gegebenenfalls auch während des Betriebes innerhalb einer Verbrauchsperiode anzeigt.

3. System nach Anspruch 1 oder 2,
dadurch gekennzeichnet,
daß das Lese/Codiergerät eine Tastatur (13) aufweist und daß der Wert der Wertkarte (1) nur dann eingelesen wird, wenn ein mit der Tastatur (13) eingegebenes Codewort mit dem auf der Wertkarte (1) gespeicherten Codewort übereinstimmt.

4. System nach Anspruch 2 der 3,
dadurch gekennzeichnet,
daß die Anzeigeeinrichtung (12) nur dann eine Anzeige für den jeweiligen Benutzer liefert, wenn die Wertkarte (1) in das Lese/Codiergerät (2) eingeführt ist.

5. System nach einem der Ansprüche 2 bis 4,
dadurch gekennzeichnet,
daß die Daten nur für eine vorgegebene Zeitdauer von der Anzeigeeinrichtung (12) angezeigt werden.

6. System nach einem der Ansprüche 1 bis 5,
dadurch gekennzeichnet,
daß der Rechner (3) den von der jeweiligen Wertkarte (1) eingelesenen Wert hinsichtlich der verfügbaren Energiemenge mit einer vorgegebenen Anzahl von Impulsen pro Energieeinheit umrechnet und als Summe von Zählimpulsen für den jeweiligen Benutzer und dessen zugeordneten Verbraucheranschluß (7A bis 7N) speichert.

7. System nach einem der Ansprüche 1 bis 6,
dadurch gekennzeichnet,
daß der Verbraucherzähler (4) in Abhängigkeit vom Energieverbrauch und gesondert für jeden Verbraucheranschluß (7A bis 7N) Zählimpulse an den Rechner (3) liefert, wobei jede Energieeinheit einer vorgegebenen Anzahl von Zählimpulsen entspricht,
und daß der Rechner (3) einen Subtrahierer aufweist, der die Zählimpulse gemäß dem Verbrauch von der verfügbaren Summe von Zählimpulsen subtrahiert und der ein Unterbrechungssignal für die Freigabeeinrichtung (5) liefert, wenn die verfügbare Summe auf Null abgenommen hat.

8. System nach einem der Ansprüche 1 bis 7,
dadurch gekennzeichnet,
daß der Rechner (3) eine Sendeeinrichtung (9) aufweist, die am Ort des jeweiligen Verbraucheranschlusses (7A bis 7N) ein Warnsignal liefert, wenn bei zeitlich gleichbleibend angenommenem Energieverbrauch nur noch eine begrenzte Menge an Restenergie als Reserve lieferbar ist.

9. System nach Anspruch 8,
dadurch gekennzeichnet,
daß die Sendeeinrichtung (9) derart an die Versorgungsleitungen (A bis N) angeschlossen ist, daß sie auf der jeweiligen Versorgungsleitung ein Warnsignal einkoppelt, wenn nur noch die begrenzte Menge an Restenergie als Reserve lieferbar ist.

10. System nach Anspruch 8 oder 9,
dadurch gekennzeichnet,
daß jedem Verbraucheranschluß (7A bis 7N) eine entfernbare optische und/oder akustische Warneinrichtung zugeordnet ist, die mit einer vorgegebenen Signalfrequenz arbeitet.

11. System nach einem der Ansprüche 1 bis 10,
dadurch gekennzeichnet,
daß der Rechner (3) nach dem Einlesen der Daten von der Wertkarte (1) eines ersten Benutzers für einen bestimmten Verbraucheranschluß (7A bis 7N) diesen Verbraucheranschluß für den ersten Benutzer freigibt, aber für jeden anderen Benutzer so lange sperrt, bis der eingelesene Wert für die verfügbare Energie verbraucht ist.

12. System nach einem der Ansprüche 1 bis 11,
dadurch gekennzeichnet,
daß der Rechner (3) nach dem Einlesen der Daten von der Wertkarte (1) eines ersten Benutzers für einen bestimmten Verbraucheranschluß (7A bis 7N) nur dann Daten von einer weiteren Wertkarte (1) desselben Benutzers einliest, wenn die Identität dieses ersten Benutzers aus den persönlichen Kenndaten der Wertkarte (1) und/oder den über die Tastatur (13) eingegebenen Kenndaten festgestellt worden ist.

13. System nach einem der Ansprüche 1 bis 12,
dadurch gekennzeichnet,
daß der Rechner (3) die Daten für einen verbliebenen Restwert von nicht verbrauchter Energie für einen Verbraucheranschluß nur dann auf eine Wertkarte (1) zurückcodiert, wenn die Identität des jeweiligen Benutzers aus den persönlichen Kenndaten der Wertkarte (1) und/oder den über die Tastatur (13) eingegebenen Kenndaten festgestellt worden ist.

14. System nach einem der Ansprüche 1 bis 13,
dadurch gekennzeichnet,
daß die Energiezufuhr zu dem jeweiligen Verbraucheranschluß (7A bis 7N) durch das Einstecken der Wertkarte (1) in das Lese/Codiergerät (2) und den Befehl zum Zurückcodieren des Restwertes auf die Wertkarte (1) unterbrochen wird.

15. System nach einem der Ansprüche 1 bis 14,
dadurch gekennzeichnet,
daß die Wertkarten (1) wiederholt verwendbare und nachladbare Magnetkarten oder IC-Karten sind, die mit unterschiedlichen Wertvorgaben geladen werden können.

16. System nach einem der Ansprüche 1 bis 15,
dadurch gekennzeichnet,
daß das gesamte System in einem transportablen, abschließbaren Gehäuse (16) aus rostfreiem Material, insbesondere aus isolierendem Kunststoff untergebracht ist, dessen Innenraum gegen Spritzwasser und Regenwasser geschützt sowie mit einer Klimaanlage (17) versehen ist.

17. System nach einem der Ansprüche 1 bis 16,
dadurch gekennzeichnet,
daß das System eine eigene Stromversorgung aufweist, die die Steuerung (3) und/oder die Klimaanlage (17) mit Strom versorgt.

18. System nach einem der Ansprüche 1 bis 17,
dadurch gekennzeichnet,
daß die jeweiligen Verbraucheranschlüsse (7A bis 7N) an Überstrom- und Fehlerstrom-Schutzeinrichtungen angeschlossen und mit einer Phasenüberwachung ausgerüstet sind.

19. System nach einem der Ansprüche 1 bis 18,
dadurch gekennzeichnet,
daß der Verbraucherzähler (4) stoßunempfindlich ist und eine hohe elektromagnetische Verträglichkeit (EMV) aufweist.

20. System nach einem der Ansprüche 1 bis 19,
dadurch gekennzeichnet,
daß die gesamte Elektrik des Systems mit einem Überspannungsschutz (15) ausgerüstet ist, der sowohl auf Spannungsspitzen der Stromversorgung (8) als auch auf Blitzschlageinwirkungen reagiert und diese zur Erde ableitet.
